## Europäisches Patentamt
## European Patent Office
## Office européen des brevets

(19)

(11) Numéro de publication: **0 061 364**
**B1**

(12) # FASCICULE DE BREVET EUROPEEN

(45) Date de publication du fascicule du brevet:
**21.08.85**

(51) Int. Cl.⁴: **H 01 H 71/12**

(21) Numéro de dépôt: **82400256.2**

(22) Date de dépôt: **15.02.82**

(54) Disjoncteur basse tension multicalibre à déclencheur hybride.

(30) Priorité: **10.03.81 FR 8105153**

(43) Date de publication de la demande:
**29.09.82 Bulletin 82/39**

(45) Mention de la délivrance du brevet:
**21.08.85 Bulletin 85/34**

(84) Etats contractants désignés:
**BE CH DE GB IT LI NL SE**

(56) Documents cités:
**DE - A - 1 513 455**
**FR - A - 623 728**
**FR - A - 2 400 765**
**GB - A - 174 475**
**US - A - 2 450 973**
**US - A - 4 181 389**
**US - A - 4 209 817**

(73) Titulaire: **MERLIN GERIN, Rue Henri Tarze,**
**F-38050 Grenoble Cedex (FR)**

(72) Inventeur: **Legrand, Michel, 8, rue du Docteur Hideux,**
**F-76360 Barentin (FR)**
Inventeur: **Canonne, Paul, 2, rue Emile Eliot,**
**F-76360 Barentin (FR)**
Inventeur: **Brault, Christian, Hameau de la**
**Garenne-Emanville, F-67570 Pavilly (FR)**

(74) Mandataire: **Kern, Paul et al, Merlin Gerin Sce.**
**Brevets 20, rue Henri Tarze, F-38050 Grenoble Cedex**
**(FR)**

Description

# Description

L'invention est relative à un disjoncteur basse tension selon le préambule de la revendication 1.

Le document US-A-4.209.817 décrit un disjoncteur du genre mentionné à déclencheur statique, qui présente l'avantage d'une simplicité du changement des réglages. Les déclencheurs électroniques remplacent avantageusement, dans les disjoncteurs de calibre élevé, les déclencheurs thermiques et électromagnétiques, mais leur coût et les difficultés d'incorporation à l'intérieur du boîtier ont empêché jusqu'à présent leur utilisation pour des disjoncteurs de faible calibre. L'un des points critiques des déclencheurs statiques est le capteur de courant qui doit délivrer un signal proportionnel linéaire pour une plage de courant traversant importante et doit être stable en température et d'un coût permettant son utilisation dans les petits disjoncteurs.

Le but de la présente invention est de permettre la réalisation d'un disjoncteur à déclencheur alliant les avantages des déclencheurs électromagnetiques et des déclenscheurs électroniques. Ce but est atteint par la mise en oeuvre des caractéristiques de la partie caractérisante de la revendication 1.

Les surcharges élevées sont prises en compte par un déclencheur électromagnétique classique à seuil de déclenchement fixe et le déclencheur statique n'intervient et n'est soumis qu'aux courants de surcharge relativement faibles. Cette solution hybride permet un abaissement du coût de fabrication du déclencheur statique sans complication notable du disjoncteur. Le changement de calibre n'intervient que sur le déclencheur statique en prévoyant un pont diviseur de tension, qui atténue le signal délivré par le capteur de courant. Lorsque le calibre sélectionné est faible l'appareil est surdimensionné et il supporte le retard au déclenchement introduit par le circuit long retard du déclencheur statique sans inconvénient majeur. Dans le cas d'une surcharge importante, notamment d'un court-circuit sur un appareil au calibre le plus élevé, le déclenchement doit être instantané, et selon l'invention il est réalisé par le déclencheur électromagnétique conventionnel.

La suppression des bilames est particulièrement avantageuse dans les disjoncteurs à calibre multiple où i'on supprime du même coup les shunts de changement de calibre. En réduisant ainsi l'échauffement de l'appareil, la gamme de calibres peut être augmentée.

La plage de réglage de calibre est doublée par l'emploi, selon l'invention, d'un transformateur de courant à circuit magnétique à trois branches, le bobinage secondaire étant disposé sur la branche médiane.

L'enroulement primaire est constitué par un seul passage ou par deux passages, à travers les fenêtres, d'un conducteur de phase. En utilisant un seul passage on réduit de moitié le signal délivré par le capteur et le même déclencheur statique peut être utilisé pour deux gammes différentes de disjoncteurs. Un enroulement primaire à double passage est avantageusement réalisé par un premier conducteur traversant l'une des fenêtres et un deuxième conducteur traversant l'autre fenêtre, les extrémités des deux conducteurs étant reliées par une plaquette soudée à chacun des conducteurs. Dans le cas d'un simple passage l'enroulement peut être réalisé d'une manière similaire en faisant passer l'un des conducteurs à l' extérieur du circuit magnétique.

Le document FR-A-623.728 décrit un transformateur de courant ayant un noyau à trois branches, dont la branche médiane porte les bobinages primaire et secondaire. Les deux autres branches portent un enroulement compensateur de flux. Ce transformateur n'est pas associé à un déclencheur statique et ne prévoit pas un réglage.

Le déclencheur statique est du type à propre courant, dans lequel l'énergie de déclenchement est accumulée dans un condensateur. Le capteur de courant et le déclencheur électromagnétique sont avantageusement superposés à l'intérieur du boîtier du disjoncteur, le conducteur formant l'enroulement du déclencheur électromagnétique étant amené directement au capteur où il traverse l'une des fenêtres avant d'être raccordé à la plaquette de liaison dans le cas d'un capteur à double passage.

Le déclencheur selon la présente invention permet d'éviter tout réglage du dispositif de déclenchement temporisé, lors du montage ou de l'installation du disjoncteur. Il a été constaté que le circuit électronique peut être facilement ajusté lors de sa fabrication et qu'il suffisait de réaliser un capteur ajustable pour supprimer tout réglage ce qui contribue à abaisser le coût de fabrication du déclencheur statique. Le capteur peut être ajusté en faisant varier un entrefer ménagé entre deux parties du circuit magnétique. Le bobinage secondaire est mis en place sur l'une desdites parties et est relié à un appareil de mesure. Un conducteur traversant une fenêtre du circuit magnétique est parcouru par un courant prédéterminé d'excitation du capteur et la position relative desdites deux parties est modifiée pour faire varier l'entrefer et ajuster une caractéristique prédéterminée de réponse du capteur.

Le disjoncteur multi-calibres selon l'invention est particulièrement intéressant sur le plan économique lorsqu'il assure en même temps une protection différentielle. Dans ce cas le relais de déclenchement est avantageusement commun au déclencheur de surcharge et au déclencheur différentiel, le maximum de rentabilité étant l'utilisation en multipolaire différentiel multi-calibres, demandée notamment pour des disjoncteurs d'abonnes.

D'autres avantages et caractéristiques de l'invention ressortiront plùs clairement de la description qui va suivre de différents mode de mise en oeuvre, donnés à titre d'exemples non limitatifs et représentés aux dessins annexés, dans lesquels:

la figure 1 est une vue schématique en élévation d'un pôle d'un disjoncteur selon l'invention, la face latérale étant supposée enlevée;

la figure 2 est une vue schématique en plan du disjoncteur selon la figure 1;

la figure 3 montre le schéma du dispositif de déclenchement du disjoncteur selon les figures 1 et 2;

la figure 4 est une vue schématique en perspective d'un détail de la figure 1;

la figure 5 montre un dispositif d'enrobage avec possibilité de réglage de l'entrefer du capteur selon l'invention.

L'invention est décrite par la suite comme étant appliquée à un disjoncteur de branchement du type décrit dans le brevet français No 2.295.553, auquel on se reportera avantageusement pour de plus amples détails sur l'agencement de ce disjoncteur.

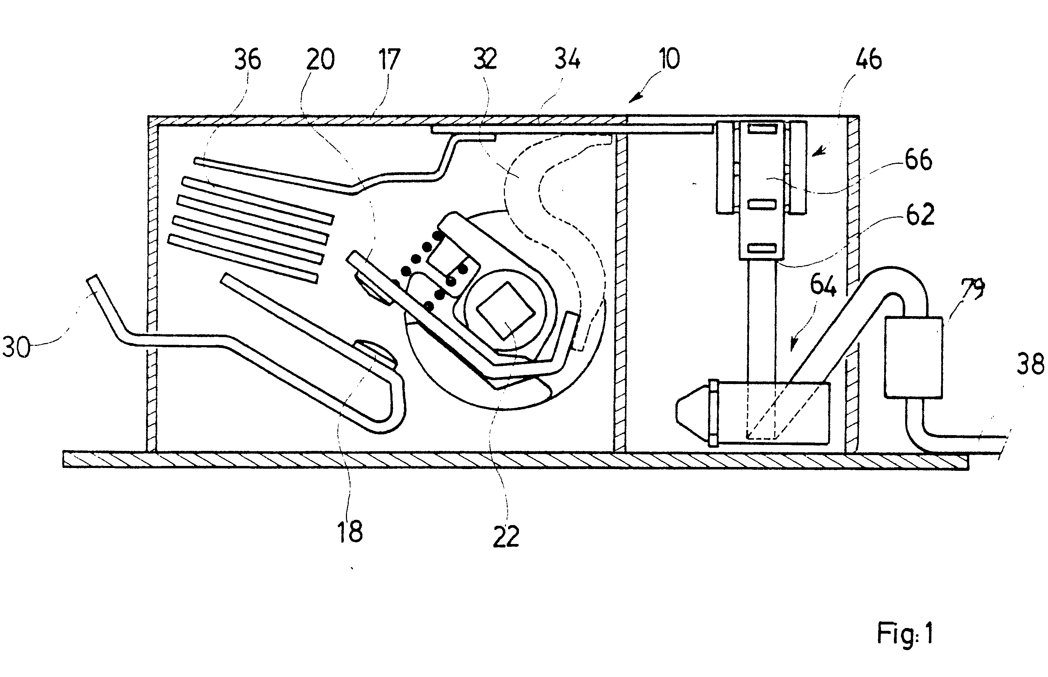

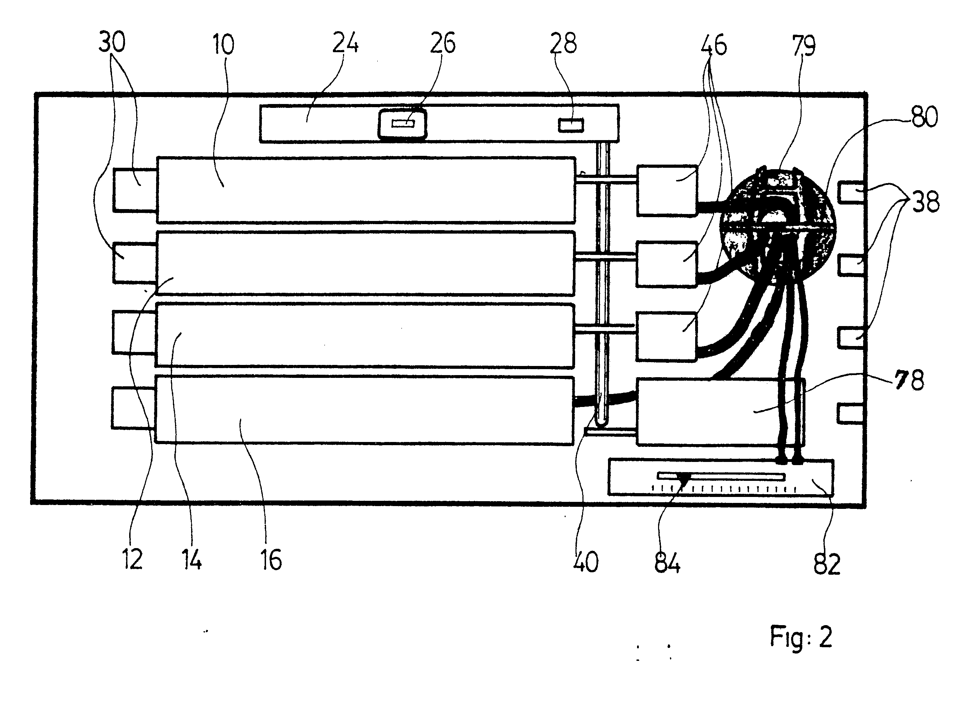

On reconnaît sur les figures 1 et 2 les quatre pôles 10, 12, 14, 16 (trois phase plus neutre), chacun logé dans un boîtier isolant 17 et comportant une paire de contacts fixe 18 et mobile 20. Le contact mobile 20 est porté par un barreau rotatif 22 reliant les différents pôles 10, 12, 14, 16 à un mécanisme de commande 24, ayant un bouton de commande de fermeture 26 et un bouton de déclenchement 28. Le contact fixe 18 est relié à une borne de connexion 30, tandis que le contact mobile 20 est relié par une tresse 32 à une plaque 34 accolée à la paroi supéricure du boîtier isolant 17. L'une des extrémités de la plaque 34 est reliée à une tôle d'extrémité d'une chambre de coupure 36 associée à la paire de contacts 18, 20 opposée de la plaque 34 traversant un orifice ménagé dans le boîtier 17 pour être reliée à une borne opposée 38 par l'intermédiare de dispositifs de détection décrits en détail ci-dessous. Tous les pôles 10, 12, 14, 16 sont identiques et le nombre de pôles peut bien entendu être quelconque, l'ensemble des pôles étant commandé par un mécanisme unique 24. Le déclenchement du disjoncteur par ouverture de l'ensemble des pôles 10 à 16 peut être commandé manuellement par enfoncement du bouton poussoir 28 ou par coulissement d'une barre de déclenchement 40. Un tel disjoncteur est bien connu, et il inutile de le décrire plus en détail.

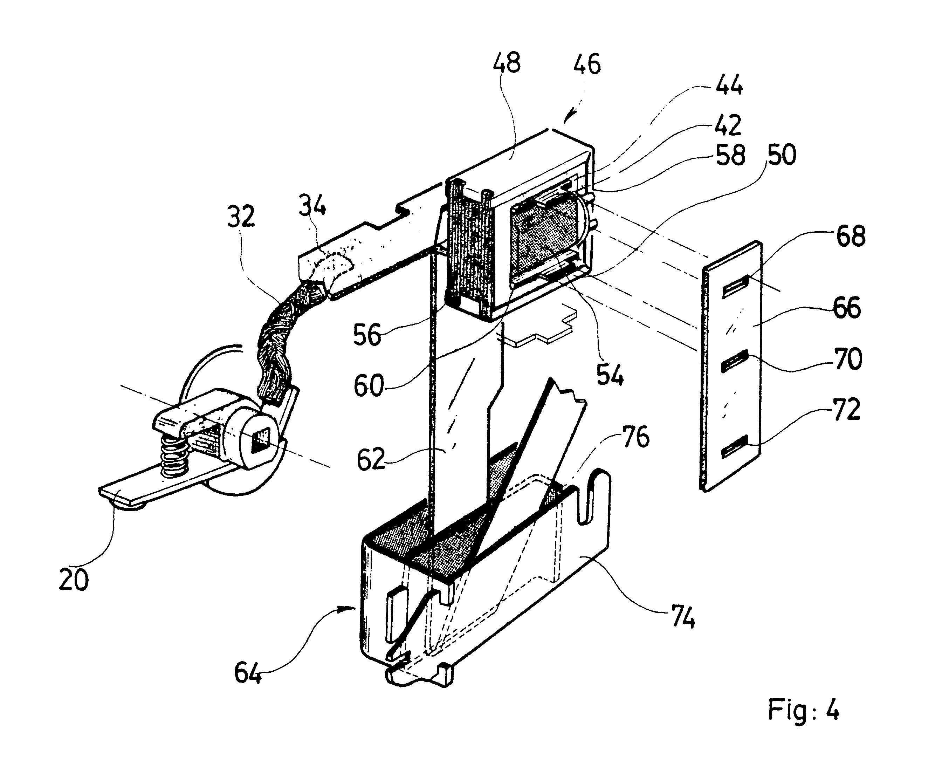

En se référant plus particulièrement aux figures 1, 4 et 5 on voit que l'extrémité de la plaque 34 externe au boîtier 17 est conformée en une languette 42 traversant une fenêtre 44 d'un capteur de courant 46. Le capteur de courant 46 comporte trois branches parallèles, deux branches externes 48, 50, et une branche intermédiaire 52, cette dernière portant une bobine 54 constituant l'enroulement secondaire du capteur 46. Le circuit magnétique est en deux parties 56, 58, séparées par un faible entrefer d'épaisseur variable. La fenêtre 44 recevant la languette 42 est ménagée entre la bobine 54 et la branche 48, une fenêtre 60 étant ménagée d'une manière analogue entre la bobine 54 et l'autre branche externe 50 du circuit magnétique. La fenêtre 60 est traversée par l'extrémité d'un conducteur 62 constituant l'enroulement d'un déclencheur électromagnétique 64 adjacent au capteur 46. Une plaquette de liaison 66 à mortaises 68, 70, 72 relie les extrémités de la languette 42 et du conducteur 62 présentant des tenons, qui s'engament dans les mortaises 68, 70. La liaison mécanique et électrique est complétée par soudage. La languette 42 et le conducteur 62 constituent deux passages d'un entroulement primaire du capteur 46 dont l'enroulement secondaire, formé par la bobine 54, délivre un signal proportionnel au courant parcourant l'enroulement primaire. La languette 42 et le conducteur 62 sont de forme méplate et remplissement la quasi-totalité des fenêtres 44, 60. Sur la figure 4 on a schématiquement représenté en trait fin, de manière à réaliser un capteur à un seul passage avec les mêmes éléments constitutifs, l'extrémité du conducteur 62 passant à l'extérieur du circuit magnétique du capteur 46.

Le déclencheur électromagnétique 64 d'un type standard à palette 74 et à culasse 76 entouré par un ou plusieurs tours du conducteur 62 est disposé en-dessous du capteur 46 pour permettre une liaison directe par le conducteur 62. A la sortie du déclencheur électromagnétique 64 le conducteur 62 traverse un tore 79 d'un transformateur différentiel avant de se raccorder à la born de sortie 38. Chaque pôle de phase comporte un capteur 46 et un déclencheur électromagnétique 64, tandis que le tore 79 est commun aux différents pôles, et dans l'exemple illustré par la figure 2, le tore 79 est traversé par les quatre conducteurs 62 des différents pôles. Le tore 79 porte un unroulement secondaire 80, qui délivre un signal de déclenchement lors de l'apparition d'un courant différentiel.

Les signaux délivrés par les enroulements secondaires des capteurs 46 et du transformateur différentiel 79 sont appliqués à un bloc électronique 82, qui pilote un relais de déclenchement 78 avantageusement du type polarisé bien connu des spécialistes, qui actionne la barre de déclenchement 40 lorsqu'il est excité par un courant de déclenchement.

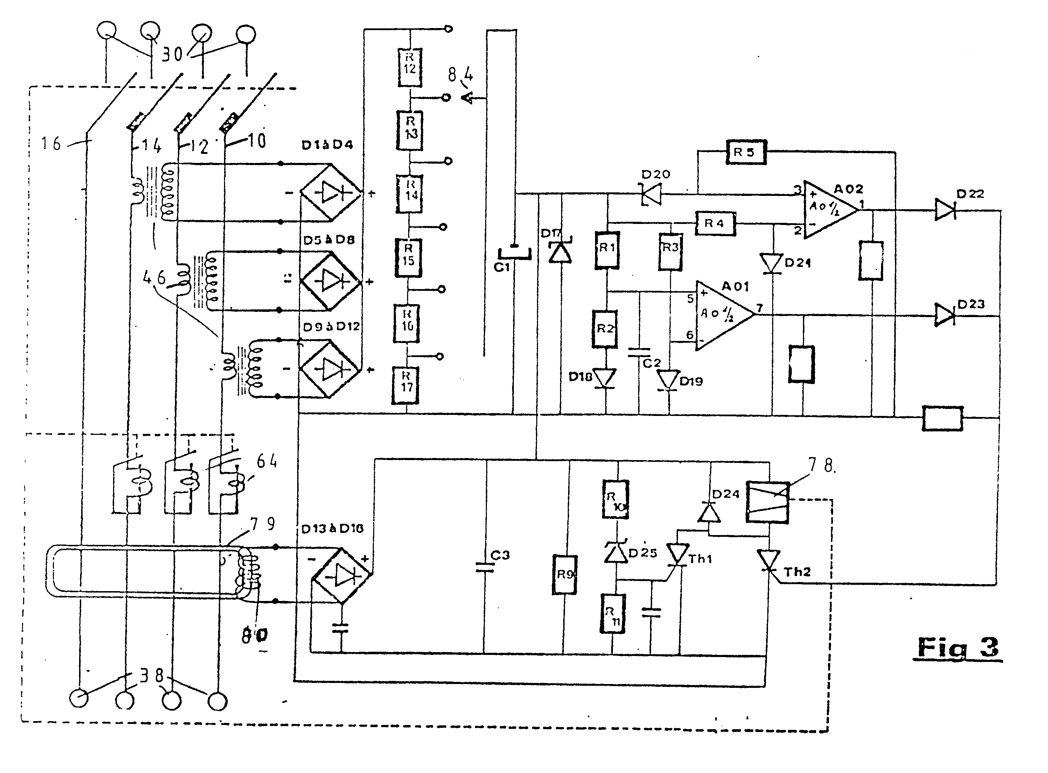

La figure 3 représente le schéma électronique du bloc 82. Les signaux délivres par les trois capteurs 46 sont redressés dans trois ponts à diodes D 1 à D 4; D 5 à D 8 et D 9 à D 12. Les sorties des ponts sont reliées en parallèle et débitent en charge constante sur un pont diviseur de tension à six résistances R 12, R 13, R 14, R 15, R 16, R 17, connectées en série avec des points de prélèvement de tension par un curseur 84. Le nombre de résistances et de points de prélèvement peuvent bien entendu être différents ou le pont peut être constitué par un simple potentiomètre. Le tension prélevée au curseur 84 correspond à la grandeur du courant traversant les capteurs 46 corrigée ou atténuée par le pont diviseur de tension R 12 à R 17. Le curseur 84 est relié à une capacité

$C_1$, qui est chargée par la tension délivrée par le curseur 84 et constitue un réservoir d'énergie qui sert à la fois à actionner le relais de déclenchement 78 et à alimenter les amplificateurs. La capacité $C_1$ est shuntée par une diode Zener D 17, qui est une diode de protection protégant les entrées des amplificateurs opérationnels. Aux bornes de la capacité $C_1$ sont connectés d'une part un circuit de polarisation à résistance R 3 et diode D 19 de l'entrée négative 6 d'un premier amplificateur opérationnel $AO_1$, et d'autre part, un circuit de temporisation à résistance R1 et capacité $C_2$ connectées en série, l'entrée positive 5 de l'amplificateur opérationnel $AO_1$ étant reliée au point intermédiaire entre la résistance R 1 et la capacité $C_2$. Aux bornes de la capacité $C_2$ est relié un circuit de décharge à résistance $R_2$ en série d'une diode D 18 servant à la compensation en température. La sortie 7 de l'amplificateur opérationnel $AO_1$ est reliée par une diode D 23 à la gâchette d'un thyristor $TH_2$ connecté en série du relais de déclenchement 78 dans le circuit de décharge de la capacité $C_1$. En fonctionnement normal, la tension aux bornes de la capacité $C_2$ n'atteint jamais une valeur suffisante pour débloquer l'amplificateur opérationnel $AO_1$. Dans le cas d'une surcharge, détectée par l'un des capteurs 46, la capacité $C_2$ se charge à travers la résistance $R_1$ et dès que la tension aux bornes de la capacité $C_2$ dépasse la valeur de la tension applique à l'entrée négative 6 de l'amplificateur opérationnel $AO_1$, ce dernier se débloque pour exciter la gâchette du thyristor $TH_2$ qui devient passant. L'energie emmagasinée dans la capacite $C_1$ traverse le relais 78 et le thyristor $TH_2$ en provoquant le déclenchement du disjoncteur. Cet ensemble constitue le circuit de déclenchement long retard, la temporisation étant fournie par la charge progressive de la capacité $C_2$ à travers la résistance R 1.

L'entrée négative d'un deuxième amplificateur opérationnel $AO_2$ est polarisée d'une manière analogue par la tension d'une diode D 24 et une résistance R 4 connectées en série aux bornes de la capacité $C_1$. L'entrée positive 3 de l'amplificateur opérationnel $AO_2$ est polarisée par une résistance R 5 et peut être commandée par la conduction d'une diode Zener D 20 reliée à la capacité C 1. La sortie 1 du deuxième amplificateur $AO_2$ est reliée à la gâchette du thyristor $TH_2$. Il est facile de voir que lorsque la tension aux bornes de la capacité $C_1$ est importante et dépasse le seuil de la diode Zener D 20, cette dernière devient conductrice et débloque l'amplificateur opérationnel $AO_2$, qui délivre un signal de déclenchement au thyristor $TH_2$, qui en devenant conducteur excite le relais 78 et provoque le déclenchement du disjoncteur. Ce deuxième circuit constitue un circuit court retard de déclenchement intervenant en cas de surcharge d'une valeur plus élevée à celle provoquant le déclenchement long retard.

L'enroulement secondaire 80 du tore différentiel 79 alimente un pont redresseur à diodes D 13 à D 16 dont la sortie est reliée à une capacité $C_3$.

Aux bornes de la capacité $C_3$ est connecté un circuit comportant en série une résistance R 10, une diode Zener D 25 et une résistance R 11. La gâchette d'un thyristor $TH_1$ est reliée au point intermédiaire entre la diode D 25 et la résistance R 11, de manière à débloquer le thyristor $TH_1$ lorsque la diode Zener D 25 devient conductrice. Une résistance R 9, branchée aux bornes de la capacité $C_3$, permet une décharge progressive de la capacité $C_3$ pour éviter des déclenchements intempestifs sur accumulation de micropics parasites. Le thyristor $TH_1$ est connecté en série du relais 78 aux bornes de la capacité $C_3$, et l'on comprend que lors de la conduction du thyristor $TH_1$ la capacité $C_3$ se décharge en actionnant le relais 78. Lors de l'apparition d'un defaut différentiel, détecté par le tore 79, la capacité $C_3$ se charge et lorsque le seuil de la diode Zener D 25 est atteint cette dernière devient conductrice et débloque le thyristor $TH_1$ en provoquant l'exitation du relais 78 et le déclenchement du disjoncteur. Le même relais de déclenchement 78 peut être sélectivement excité soit par le dispositif de déclenchement à court retard ou a long retard sur surcharge, soit par le dispositif de déclenchement différentiel. Il est inutile de décrire plus en détail ces circuits électroniques qui peuvent être d'un type différent, et il suffit de remarquer que ces dispositifs sont à propre courant ne nécessitant aucune source d'alimentation auxiliaire. Certains éléments secondaires d'anti-parasitage ou de protection figurent au schéma de la figure 3 mais n'ont pas été décrits.

Le fonctionnement du disjoncteur selon l'invention est decrit ci-dessous en référence à un exemple particulier, mais il est clair que les valeurs indiquées à titre d'exemple peuvent être absolument différentes:

Les six positions du curseur 84 du pont diviseur de tension R 12 à R 17 permettent une atténuation du signal délivrée par les capteurs 46 respectivement dans les rapports 1; 1,25; 1,333; 1,5; 1,666 et 2. Dans le cas d'un appareil d'un calibre minimal de 30 Ampères on comprend que selon la position du curseur 84 le calibre peut être réglé aux valeurs suivantes:

30; 37,5; 40; 45; 50; 60 Ampères. Ces valeurs sont valables pour un capteur de courant 46 à double passage du conducteur 34, 62, du type illustré à la figure 4. En prévoyant un seul passage du conducteur 34, en faisant passer le conducteur inférieur 62 en dehors du circuit magnétique du capteur 46, il est possible de multiplier par deux les valeurs précitées et de sélectionner les calibres suivants: 60; 75, 80; 90; 100 et 120 Ampères. Le changement de calibre par simple coulissement du curseur 84 peut être effectué sur place et ne présente aucune difficulté. La modification du nombre des passages de l'enroulement primaire du capteur 46 nécessite une ouverture du boîtier et est réalisée en usine, l'avantage étant de pouvoir utiliser les mêmes éléments pour réaliser une deuxième gamme de disjoncteurs d'un calibre plus élevé. Le déclencheur électromagnétique 64 est par exemple réglé à 600 Ampères, valeur compatible avec les différents calibres sélectionnés. Ce seuil de déclenchement est fixe, quel que soit calibre sélectionné. Dans le cas d'un appareil réglé pour un faible calibre, par exemple de 30 Ampères, et d'une faible surcharge, par exemple inférieure à 300 Ampères, le déclencheur électromagnétique n'intervient pas. La surcharge est détectée par les capteurs 46, qui délivrent un signal au circuit long retard et au circuit court retard du déclencheur statique. Le seuil d'amorçage de la diode Zener D 20 du circuit court retard n'est pas atteint et le déclenchement du disjoncteur est provoqué par le circuit long retard après une temporisation fonction de la durée de charge de la capacité $C_2$, qui débloque l'amplificateur opérationnel $AO_1$ et déclenche le thyristor $TH_2$ après une durée prédéterminée, fonction de la valeur de la surcharge. Dans le cas d'une surcharge importante, par exemple supérieure à 300 Ampères mais inférieure à 600 Ampères, correspondant au seuil de déclenchement du déclencheur magnétique, le circuit court retard intervient par amorçage de la diode Zener D 20, qui provenque le déblocage de l'amplificateur opérationnel $AO_2$ et la conduction du thyristor $TH_2$. Un court-circuit est éliminé instantanément par le déclencheur électromagnétique 64, qui devance l'action du déclencheur électronique à court retard et à long retard.

Lorsque l'appareil est réglé pour un calibre plus élevé, par exemple à 90 Ampères, la plage de fonctionnement du déclencheur électromagnétique 64 et celle du déclencheur court retard se superposent et le déclencheur électromagnétique plus rapide supplante le déclencheur statique court retard. Lors d'un réglage pour un calibre élevé les surcharges importantes sont coupées instantanément par le déclencheur électromagnétique 64, les surcharges faibles étant prises en compte par le déclencheur électronique à long retard.

Un défaut différentiel est détecté par le tore 79, qui actionne par conduction du thyristor $TH_1$ le même relais de déclenchement 78 en provoquant l'ouverture de l'ensemble des pôles du disjoncteur.

Il convient de noter qu'un même appareil peut être équipé soit de déclencheurs classiques électromagnétiques et à bilames, soit d'un déclencheur hybride selon l'invention, l'encombrement de ce dernier permettant le logement à la place des bilames.

La commutation de calibres intervient à bas niveau et il est possible d'envisager une commutation à distance ou une télécommande par tout moyen opérant. Le déclencheur statique selon l'invention permet éventuellement de modifier la courbe de déclenchement long retard en agissant sur la constante du circuit résistance R 1, capacité $C_2$ sans modification notable du disjoncteur. Le déclencheur statique se prête également à un perfectionnement ou une adaptation en disjoncteur de délestage en prélevant un signal de délestage aux bornes de la capacité $C_1$

pour déclencher un disjoncteur d'un circuit aval non prioritaire.

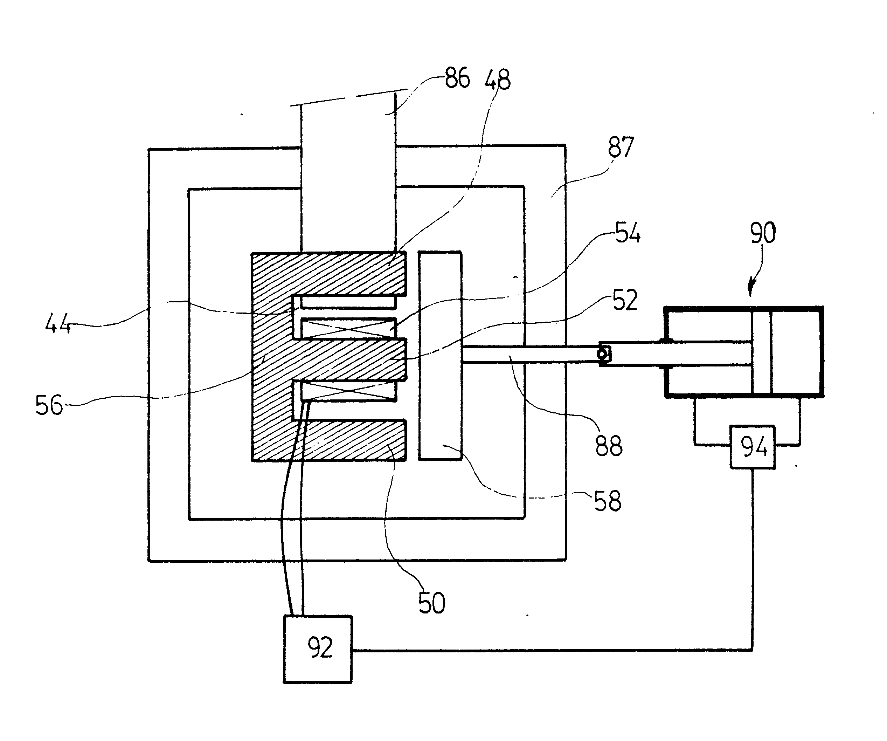

Il a été constaté que le disjoncteur électronique selon l'invention ne nécessite aucun réglage lors du montage ou en cours d'utilisation si les capteurs 46 disponibles présentent une faible dispersion, et la figure 5 illustre une installation d'enrobage et de réglage de l'entrefer d'un capteur 46 pour obtenir une caractéristique de réponse prédéterminée. Sur la figure 5, les deux parties du circuit magnétique 56, 58 sont mises en place dans un moule 87, la bobine 54 ayant préalablement été montée sur la branche 52 du circuit magnétique. La partie 56 est portée par une broche 86 traversant la fenêtre 44 du circuit magnétique et reliée à une source de courant (non représentée). L'autre partie 58 du circuit magnétique porte une queue amagnétique 88 traversant la paroi du moule et reliée à une tige d'un vérin 90 susceptible de rapprocher ou d'écarter les deux parties 56, 58 du circuit magnétique en faisant varier l'entrefer. La bobine 54 est reliée par des conducteurs traversant le moule 87 à un appareil de mesure 92, qui pilote un dispositif de commande 94 du vérin 90. Le déplacement de la partie 58 du circuit magnétique est asservi par les blocs 92, 94 au signal délivré par la bobine 54 pour un courant d'excitation donné parcourant le conducteur 86. Il est ainsi possible de régler automatiquement l'entrefer du circuit magnétique 56, 58 pour obtenir un signal prédéterminé. Des la fin du réglage on injecte une matière plastique ou résine à prise rapide, qui immobilise les parties 56, 58 du circuit magnétique en assurant la constance de l'entrefer. L'enlèvement de la broche 86 libère la fenêtre 44 pour le passage du conducteur 34 lors du montage de l'appareil, et l'on comprend que le capteur 46 se trouve en fonctionnement dans les mêmes conditions que lors du réglage de son entrefer avant le moulage. On est ainsi assuré d'une correspondance parfaite entre la valeur du signal réglé lors du moulage et celle du signal délivré par le capteur 46 dans l'appareil monté. Le dispositif illustré à la figure 5 est bien entendu simplifié, et il peut être réalisé par tout autre moyen de déplacement relatif ou de réglage de l'entrefer sans sortir du cadre de la présente invention. La broche 86 sert avantageusement au positionnement du circuit magnétique à l'intérieur du moule 87 et un noyau (non illustré) peut être inséré à l'emplacement de la fenêtre 60.

## Revendications

1. Disjoncteur basse tension à calibres multiples comprenant:

- par pôle (10, 12, 14, 16) une paire de contacts séparables (18, 20),
- un mécanisme (24) de commande manuelle et/ou automatique desdits contacts séparables,
- un dispositif (82) de sélection du calibre du disjoncteur,

— un déclencheur statique qui assure une protection long retard et une protection court retard, piloté par un capteur de courant (46) fournissant un signal proportionnel au courant parcourant le disjoncteur, ledit signal étant appliqué audit dispositif (82) de sélection du calibre, qui atténue la valeur dudit signal en fonction du calibre sélectionne, ledit signal modifié étant appliqué à un bloc électronique de traitement ayant un circuit long retard et un circuit court retard, le circuit long retard délivrant un signal de déclenchement avec un retard long pour une plage de courant de surcharge faible et le circuit court-retard délivrant un signal de déclenchement avec un retard plus court pour une plage de courant de surcharge plus fort,

caractérisé en ce qu'il comporte un déclencheur électromagnétique (64) ayant un seuil de déclenchement instantané fixe multiple du calibre le plus élevé du disjoncteur, l'ensemble étant agencé de telle manière que pour le calibre sélectionné le plus faible la plage de courant à long retard, la plage de courant à court retard et le seuil de déclenchement instantané se succèdent, tandis que pour le calibre le plus élevé le seuil de déclenchement instantané succède directement à la plage de courant along retard.

2. Disjoncteur selon la revendication 1, caractérisé par le fait que les signaux délivrés par les capteurs de courant (46) des différents pôles (10, 12, 14) de phase sont appliqués après redressement à un pont diviseur de tension (R 12 à R 17), constituant ledit dispositif (82) de sélection du calibre et délivrant un signal atténué appliqué d'une part à une diode Zener (D 20) du circuit court retard, qui, en devenant conductrice, lorsque la valeur du signal atténué dépasse le seuil de la diode Zener (D 20), provoque l'excitation du relais de déclenchement (78), ledit signal atténué étant d'autre part appliqué à travers une résistance (R₁) à un condensateur (C₂) relié à l'entrée d'un amplificateur opérationnel (AO₁) se débloquant lorsque la charge du condensateur (C₂) dépasse un seuil prédéterminé pour exciter le relais de déclenchement (78).

3. Disjoncteur selon la revendication 2, caractérisé par le fait que le circuit court retard comporte un amplificateur opérationnel (AO₂) débloqué lors de la conduction de la diode Zener (D 20), un condensateur (C₁) fournissant l'énergie d'excitation du relais de déclenchement (78) et d'alimentation des amplificateurs (AO₁, AO₂).

4. Disjoncteur selon la revendication 1, 2 ou 3, caractérisé en ce qu'il comprend de plus un transformateur différentiel (79) de détection d'un courant homopolaire, délivrant un signal appliqué après redressement à un condensateur (C₃), relié à une diode Zener (D 25), qui devient conductrice lorsque la charge du condensateur (C₃) dépasse le seuil et provoque l'excitation du relais de déclenchement (78).

5. Disjoncteur selon l'une des revendications précédentes, caractérisé par le fait que ledit capteur de courant (46) comporte:

— un circuit magnétique à trois branches (48, 50, 52) parallèles,
— un bobinage secondaire (54) monté sur la branche intermédiaire (52),
— et deux fenêtres (44, 60), chacune ménagée entre le bobinage (54) et l'une (48, 50) des branches externes et susceptible d'être traversée par un conducteur (34, 62) formant sélectivement un enroulement primaire à un ou deux passages dudit capteur de courant.

6. Disjoncteur selon la revendication 5, caractérisé en ce que ledit capteur de courant (46) et ledit déclencheur électromagnétique (64) sont superposés, ledit conducteur (34, 62) formant à la fois l'enroulement primaire du capteur (46) et le bobinage du déclencheur électromagnétique.


## Patentansprüche

1. Mehrfach einstellbarer Niederspannungs-Schutzschalter mit:

— einem trennbaren Kontaktpaar (18, 20) je Pol (10, 12, 14, 16),
— einem Mechanismus (24) zur handbetätigten und/oder automatischen Steuerung der genannten trennbaren Kontakte,
— einer Vorrichtung (82) zur Wahl des Kalibers des Schalters,
— einem statischen Auslöser, der einen Schutz bei langer Verzögerung und bei kurzer Verzögerung gewährleistet und von einem Stromfühler (46) gesteuert wird, der ein Signal abgibt, das proportional zu dem in dem Schalter fließenden Strom ist, wobei dieses Signal an der genannten Kaliberwahlvorrichtung (82) angelegt wird, welche den Wert des genannten Signals gemäß des gewählten Kalibers abschwächt, und dieses geänderte Signal wird auf einen elektronischen Verarbeitungsblock übertragen mit Langzeit-Verzögerungs- und Kurzzeit-Verzögerungsstromkreis, wobei der Langzeitverzögerungsstromkreis ein Auslösesignal mit langer Verzögerung für einen Stromabschnitt mit schwacher Überlast abgibt, und der Kurzzeit-Verzögerungsstromkreis ein Auslösesignal mit einer kürzeren Verzögerung für einen Stromabschnitt mit höherer Überlast abgibt,

dadurch gekennzeichnet, daß er einen elektromagnetischen Auslöser (64) aufweist, mit einer festen unverzüglichen Auslöseschwelle, die das Mehrfache des höchsten Kalibers des Schalters beträgt, wobei das Ganze so angeordnet ist, daß für das schwächste gewählte Kaliber der Lang zeit Verzögerungsstromabschnitt, der Kurzzeit Verzögerungsstromabschnitt und die unverzügli che Auslöseschwelle aufeinanderfolgen, wäh rend für das höchste Kaliber die unverzügliche Auslöseschwelle sofort auf den Langzeit-Verzögerungsstromabschnitt folgt.

2. Schalter gemäß Anspruch 1, dadurch gekennzeichnet, daß die von den Stromfühlern (46) der verschiedenen Phasenpole (10, 12, 14) abgegebenen Signale nach Gleichrichtung auf eine Spannungsteilerbrücke (R 12 bis R17) übertragen werden, die die Vorrichtung (82) zur Kaliberwahl bildet, und die ein abgeschwächtes Signal abgibt, welches einerseits auf eine Zener-Diode (D 20) des Kurzzeit-Verzögerungsstromkreises übertragen wird, der, wenn der abgeschwächte Signalwert die Schwelle der Zener-Diode (D 20) überschreitet, leitfähig wird und die Erregung des Auslöserelais (78) bewirkt, und welches abgeschwächte Signal andererseits durch einen Widerstand (R1) auf einen Kondensator (C2) übertragen wird, der mit dem Eingang eines einsatzbereiten Verstärkers (AO 1) verbunden ist, der gelöst wird, wenn die Last des Kondensators (C 2) einen vorbestimmten Wert überschreitet, um das Auslöserelais (78) zu erregen.

3. Schalter gemäß Anspruch 2, dadurch gekennzeichnet, daß der Kurzzeit-Verzögerungsstromkreis einen einsatzbereiten Verstärker (AO 2) aufweist, der bei der Leitung der Zener-Diode (D 20) gelöst wird, wobei ein Kondensator (C 1) die Erregungsenergie des Auslöserelais (78) und die Speiseenergie der Verstärker (AO 1, AO 2) liefert.

4. Schalter gemäß Anspruch 1, 2 oder 3, dadurch gekennzeichnet, daß er außerdem einen Differential-Transformator (79) aufweist zur Detektierung eines gleichpoligen Stromes, der ein Signal abgibt, welches nach Gleichrichtung an einen Kondensator (C 3) übertragen wird, der mit einer Zener-Diode (D 25) verbunden ist, die leitfähig wird, wenn die Last des Kondensators (C 3) die Schwelle überschreitet und die Erregung des Auslöserelais (78) hervorruft.

5. Schalter gemäß einem der vorhergehenden Ansprüche, dadurch gekennzeichnet, daß der genannte Stromfühler (46) aufweist:

— einen magnetischen Stromkreis mit drei parallelen Zweigen (48, 50, 52),
— eine Sekundärwicklung (54), die auf dem mittleren Zweig (52) angeordnet ist,
— und zwei Fenster (44, 60), von denen jedes zwischen der Wicklung (54) und einem (48, 50) der äußeren Zweige angebracht ist, und die von einem Leiter (34, 62) durchquert werden können, der wahlweise eine Primärwicklung mit ein oder zwei Durchgängen des genannten Stromfühlers bildet.

6. Schalter gemäß Anspruch 5, dadurch gekennzeichnet, daß der genannte Stromfühler (46) und der genannte elektromagnetische Auslöser (64) übereinandergelagert sind, wobei der genannte Leiter (34, 62) gleichzeitig die Primärwicklung des Fühlers (46) und die Wicklung des elektromagnetischen Auslösers bildet.

**Claims**

1. An adjustable low voltage circuit breaker comprising:

— a pair of separable contacts (18, 20) per pole (10, 12, 14, 16),
— a manual and/or automatic control mechanism (24) of the said separable contacts,
— a device (82) to select the circuit breaker rating,
— a static trip divice that ensures a long time delay and a short time delay protection, actuated by a current sensor (46) delivering a signal proportional to the current flowing through the circuit breaker, the said signal being applied to the said rating selection device (82) which attenuates the value of the said signal depending on the selected rating; the then modified signal is applied to an electronic signal processing unit which has a long delay circuit and a short delay circuit, the long delay circuit delivering a tripping signal with a long time lag for a low overload current interval, and the short delay circuit delivering a tripping signal with a shorter time lag for a higher overload current interval,

characterized in that it comprises an electromagnetic trip divice (64) with an instantaneous set tripping threshold that is a multiple of the highest rating of the circuit breaker, the whole system being designed in such a way that for the lowest selected rating the long time lag current interval, the short time lag current interval and the instantaneous tripping threshold follow one another in that order, whereas for the highest rating the instantaneous tripping threshold directly follows the long time lag current interval.

2. A circuit breaker as claimed in claim 1, characterized by the fact that the signals delivered by the current sensing units (46) of the various phase poles (10, 12, 14) are rectified then applied to a voltage divider bridge (R 12 to R 17), constituting the said rating selection device (82) that delivers an attenuated signal applied on the one hand to a Zener diode (D 20) in the short delay circuit, which, on becoming conducting, when the value of the attenuated signal exceeds the threshold of the Zener diode (D 20), excites tripping relay (78), and applied on the other hand via resistor (R 1) to a capacitor (C 2) connected to the input of an operational amplifier (AO 1) which is activated when the charge of capacitor (C 2) exceeds a predetermined threshold, and consequently excites tripping relay (78).

3. A circuit breaker as claimed in claim 2, characterized by the fact that the short delay circuit comprises an operational amplifier (AO 2) activated when the Zener diode (D 20) is conducting, while a capacitor (C 1) supplies the energy to excite tripping relay (78) and to power amplifiers (AO 1, AO 2).

4. A circuit breaker as claimed in claims 1, 2 or 3, characterized in that it comprises in addition a differential transformer (79) to detect unipolar current, which delivers a signal that is rectified then applied to a capacitor (C 3) connected to a Zener diode (D 25) which becomes conducting when the capacitor (C 3) charge exceeds the threshold and thereby excites tripping relay (78).

5. A circuit breaker according to one of the preceding claims, characterized by the fact that the said current sensor (46) comprises:

— a magnetic circuit with three parallel branches (48, 50, 52)
— a secondary winding (54) mounted on the intermediate branch (52),
— and two openings (44, 60) each provided between the winding (54) and one of the outer branches (48, 50) and through which a conductor (34, 62) can be run to form selectively a primary winding with one or two paths for the said current sensing unit.

6. A circuit breaker according to claim 5, characterized in that the said current sensor (46) and the said trip device (64) are superposed, said conductor (34, 62) constituting at the same time the primary winding of the sensor (46) and the winding of the electromagnetic trip device.

Fig. 1

Fig. 2

Fig 3

0 061 364

Fig : 4